# NOUVEAU FASCICULE DE BREVET EUROPEEN

(11) **EP 0 510 240 B2**
(45) Date de publication et mention de la décision concernant l'opposition: **27.09.2000**
(45) Mention de la délivrance du brevet: 12.07.1995
(21) Numéro de dépôt: 91108980.3
(22) Date de dépôt: 01.06.1991
(51) Int. Cl.: H01R 13/627

(54) **Dispositif de connexion**
Steckverbinder-Vorrichtung
Connecting device

(30) Priorité: 23.04.1991 CH 120791
(43) Date de publication de la demande: 28.10.1992
(73) Titulaire: INTERLEMO HOLDING S.A., CH-7000 Coire (CH)
(72) Inventeur: Pesci, Marcello, CH-1026 Echandens (CH)
(74) Mandataire: Kiliaridis, Constantin

(56) Documents cités:
- EP-A- 0 141 958
- WO-A-92/08259
- DE-B- 1 515 712
- FR-A- 1 339 284
- FR-A- 2 159 701
- FR-A- 2 191 301
- FR-A- 2 462 797
- US-A- 3 869 187
- US-A- 4 880 393
- Norme NF C93-571, 1986 (p. 25,26 feuilles 10,11,18);
- Norme CECC 22230 1ère ed. 1989, p. 1,2,6,7;
- Norme CECC 22230 2ème ed. 1989, p. 6,7;
- IEC Standard Publication 169-13, 1976.

## Description

La présente invention a pour objet un dispositif de connexion comportant deux corps tubulaires destinés à être raccordés chacun à un conducteur de transmission de signaux, électriques, photoniques ou fluidiques, et à être engagés l'un dans l'autre temporairement et dégagés l'un de l'autre manuellement, et comprenant des moyens de verrouillage automatique d'engagement et de déverrouillage manuel de dégagement.

Des dispositifs de ce genre sont connus et universellement employés dans divers domaines de la technique exigeant de très bonnes qualités de précision et de fiabilité, notamment dans ceux des télécommunications et de l'aérospatiale.

Les moyens de verrouillage automatique et de déverrouillage manuel qu'ils comportent sont de types différents selon les constructeurs et les options choisies.

Parmi ces différents types de moyens de verrouillage et de déverrouillage il en est un, auquel se rapporte l'invention, dans lequel ces moyens sont constitués par des languettes élastiques périphériques à crans d'arrêt en saillie associées à l'un des deux corps, une rainure périphérique d'engagement élastique automatique desdits crans d'arrêt située sur une paroi extérieure de l'autre corps, et une bague de déverrouillage manuel par déplacement axial pour dégager les crans d'arrêt de la rainure, ladite bague étant également associée au corps auquel sont associées les languettes élastiques à crans d'arrêt.

Avec les dispositifs de connexion comportant ces moyens, l'introduction et la poussée manuelle d'un corps dans l'autre a pour effet, outre le raccordement interne des conducteurs de signaux, d'écarter les crans d'arrêt jusqu'à leur arrivée au niveau de la rainure dans laquelle ils pénètrent alors automatiquement par l'élasticité propre des languettes qui les portent. Après quoi le verrouillage de la connexion est assuré par la retenue de ces crans d'arrêt contre toute traction sur les conducteurs ou les corps tendant à séparer ces derniers.

Lors des dégagements volontaires d'un corps de l'autre, il faut opérer une traction sur la bague de déverrouillage, celle-ci étant associée à des moyens constitués généralement par une came et un espace de dégagement qui ont pour effet de sortir les crans d'arrêt associés à un corps de la rainure associée à l'autre corps.

Un dispositif de connexion connu de ce genre est décrit dans le brevet US 3160457. Dans ce dispositif, la bague de verrouillage est montée coulissante axialement sur la paroi extérieure de l'un des deux corps et comporte des languettes élastiques à crans d'arrêt. Ces languettes sont étendues sur la périphérie de l'extrémité dudit corps en ménageant un espace de dégagement entre elles et cette paroi. L'autre corps comporte une rainure intérieure périphérique dans laquelle viennent s'engager les crans d'arrêt lors de l'introduction de l'autre corps. Une came tronconique termine le corps portant la bague de verrouillage en avant des crans d'arrêt pour empêcher ceux-ci de se dégager de la rainure lorsque les conducteurs ou les corps subissent une traction tendant à les séparer, et seule une traction sur la bague de déverrouillage permet de dégager les crans d'arrêt de la rainure par leur retrait dans l'espace de dégagement prévu à cet effet.

Le système de verrouillage automatique et de déverrouillage manuel de ces dispositifs de connexion connus est satisfaisant; il permet de connecter rapidement les conducteurs de signaux et le verrouillage qu'il assure est fiable.

Cependant, le fait de pouvoir les déverrouiller par une simple traction sur la bague de déverrouillage constitue un risque de déverrouillage accidentel suivi d'un débranchement lors de manipulations maladroites de montage ou de remplacement d'un connecteur voisin, par exemple sur un tableau présentant un ensemble multi-connecteur dans lequel une pluralité de connecteurs de ce type sont fixés très proches les uns des autres.

Le document FR-A-2159701 sur lequel se fond le préambule de la revendication 1, décrit un dispositif de connexion à encliquetage dans lequel une pièce femelle comporte une partie tubulaire pourvue d'une gorge annulaire. Une partie mâle forme à son extrémité une pluralité de languettes élastiques portant chacune un bourrelet appelé à s'engager dans la gorge annulaire de la partie femelle. Un manchon est monté coulissant sur la partie mâle et comporte, à une extrémité, une partie chanfreinée orientée vers les bourrelets et apte à passer sous ces derniers, et à l'autre extrémité un cran d'encliquetage précédé d'un bossage et d'un dégagement susceptibles de coopérer avec un circlips monté élastiquement sur la partie mâle. La surface intérieure du manchon est étagée pour bloquer les bourrelets dans la gorge lorsque le cran d'encliquetage du manchon est engagé sur le circlips, et pour permettre aux bourrelets de s'écarter radialement hors de la gorge lorsque le cran d'encliquetage est dégagé du circlips, ce qui permet en outre à l'extrémité chanfreinée du manchon de venir sous les bourrelets pour les écarter radialement et déverrouiller la connexion.

L'encliquetage, appelé à offrir une sécurité contre un déplacement intempestif du manchon qui aurait pour effet de déverrouiller le système, offre toutefois l'inconvénient d'empêcher le verrouillage automatique d'engagement si, par suite d'une manipulation malencontreuse, le manchon est encliqueté sur le circlips avant treuse, le manchon est encliqueté sur le circlips avant l'enfichage de la partie mâle dans la partie femelle car la surface intérieure étagée du manchon empêche alors tout écartement des bourrelets. Cet encliquetage présente en outre l'inconvénient de ne pas assurer de façon absolue le verrouillage qui peut toujours être déclenché lors de manipulations difficiles en site confiné.

Dans une autre catégorie de dispositifs de connexion, qui ne permettent pas une fonction de verrouillage automatique d'engagement et de déverrouillage de dégagement par simple action sur une bague de déverrouillage, le document EP-A-0141958 décrit un dispositif de connexion dans lequel des corps de verrouillage sont portés par l'un des corps du dispositif alors qu'une douille de sûreté ou bague de déverrouillage est montée mobile sur l'autre corps de la connexion qui porte aussi une rainure d'engagement des corps de verrouillage. Dans ce contexte, la douille de sûreté doit être amenée dans une position extrême de déverrouillage avant que l'on puisse obtenir la sortie (ou l'introduction) des corps de verrouillage de (ou dans) la rainure. La réduction du risque de déverrouillage par simple traction sur la bague de déverrouillage a ici pour corollaire une manipulation de déverrouillage plus compliquée et l'impossibilité d'un verrouillage d'engagement par simple action sur la bague de déverrouillage, conditions de fonctionnement particulièrement gênantes en milieu confiné.

L'invention a pour but de parer de façon simple et avantageuse à l'éventualité précitée de déverrouillage accidentel des dispositifs de connexion du type défini en début d'exposé.

A cet effet, le dispositif de connexion selon l'invention est conforme aux revendications.

De la sorte, par vissage de l'écrou sur la partie filetée du corps portant la rainure d'engagement des crans d'arrêt et son serrage ferme contre la face frontale du mandrin cylindrique, la surface de came intérieure tronconique de ce dernier maintient fermement par effet de coin les crans d'arrêt engagés dans ladite rainure. Par effet simultané, la bague de déverrouillage est immobilisée entre la collerette périphérique dudit mandrin et la paroi radiale du manchon cylindrique portant les languettes élastiques à crans d'arrêt, ce qui élimine toute possibilité de déverrouillage et de désengagement des deux corps de la connexion, le mandrin en question étant lié axialement au corps portant lesdites languettes élastiques à crans d'arrêt. Le blocage de la connexion se trouve ainsi assuré de manière absolue contre toute maladresse ou fausse manoeuvre dès l'instant du serrage de l'écrou.

Ces effets répondent ainsi de manière simple et économique au but recherché et résultent essentiellement de la conception et de l'agencement spatial particulier des éléments portant les languettes élastiques à crans d'arrêt, la rainure, la surface de came tronconique, le chambrage de dégagement et la bague de déverrouillage, à savoir : le manchon cylindrique portant les languettes élastiques à crans d'arrêt et le mandrin cylindrique qui l'interpénètre et porte à l'intérieur la came et le chambrage et à l'extérieur la bague de déverrouillage entre sa collerette et la face radiale du manchon cylindrique.

Cette conception et cet agencement particuliers permettent en effet de dégager la face frontale du mandrin du côté du corps portant la rainure et de rendre ainsi possible le blocage du système de déverrouillage par un simple écrou.

Le dessin annexé représente, à titre d'exemple, une forme d'exécution de l'objet de l'invention, cette forme d'exécution faisant en outre ressortir d'autres avantages rendus possibles par sa conception de base.

La figure 1 de ce dessin en est une demi-vue - demi-coupe axiale partielle d'ensemble, montrée en position de verrouillage bloqué.

La figure 2 en est une demi-vue - demi-coupe partielle d'ensemble, montrée en position de déverrouillage.

La figure 3 est une vue de face d'un élément de cette forme d'exécution.

Le dispositif de connexion représenté comprend deux corps tubulaires 1 et 2 destinés à être reliés chacun, par un embout 3 dont seul celui du corps 2 est représenté, à un conducteur de transmission de signaux électriques, photoniques ou fluidiques.

Les moyens de raccordement des conducteurs de signaux situés à l'intérieur de ces deux corps tubulaires n'ont pas été représentés pour la clarté du dessin.

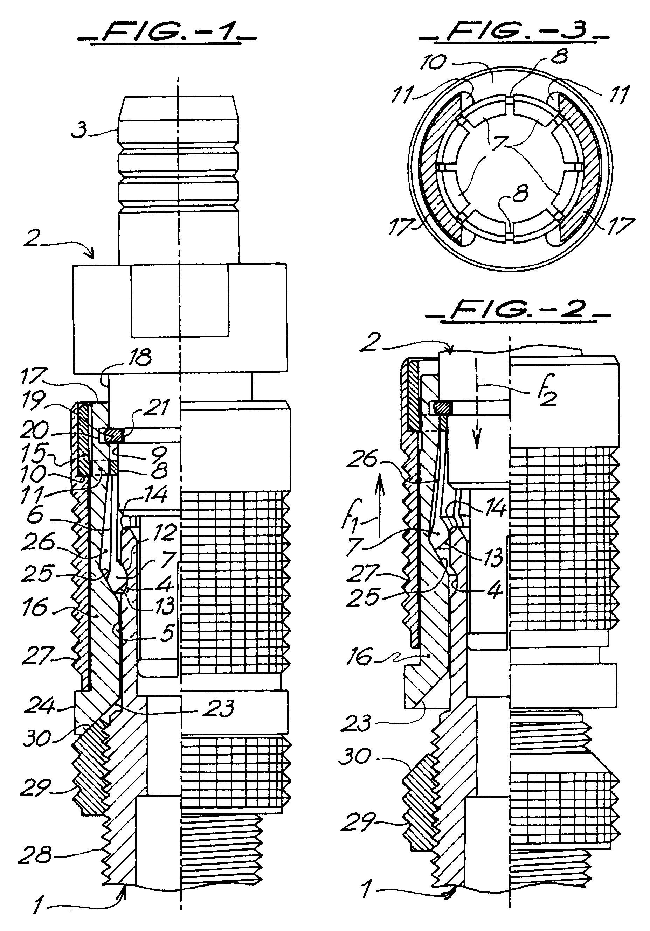

Les moyens de verrouillage et de déverrouillage des deux corps comprennent, arrangés en combinaison :
- Une rainure circulaire 4 sur la paroi extérieure 5 de l'extrémité d'engagement du corps 1, de section droite en arc de cercle.
- Des languettes élastiques 6 à crans d'arrêt 7 d'extrémité, ici au nombre de huit comme il apparaît sur la figure 3, qui sont portées par un manchon cylindrique 8 coulissant axialement sur une portée cylindrique 9 de l'autre corps 2, ce manchon 8 comportant une paroi radiale 10 de plus grand diamètre présentant des ouvertures circulaires 11 diamétralement opposées, ici au nombre de deux, bien visibles également sur la figure 3. La section droite des crans d'arrêt 7 présente une partie en arc de cercle 12 destinée à engager la rainure 4 du corps 1 et une partie droite inclinée 13 destinée à faciliter l'engagement de l'extrémité 14 du corps 1 sous ces crans d'arrêt et le soulèvement élastique de ceux-ci lors de l'introduction du corps 1 dans le corps 2. Une partie cylindrique 15 d'extrémité complète le manchon cylindrique 8 dans son plus grand diamètre, au-dessus du niveau des ouvertures 11.
- Un mandrin cylindrique 16, disposé au-dessus des languettes élastiques à crans d'arrêt 7, qui comporte du côté du corps 2 des bras d'extension 17 diamétralement opposés, ici au nombre de deux représentés en coupe transversale sur la figure 3, passant au-travers des deux ouvertures radiales 11 du manchon 8 et qui prennent appui sur un épaulement 18 du corps 2. Ce mandrin 16 est lié axialement, en avant de l'épaulement 18, par un circlip 19 maintenu avec jeu radial dans une gorge intérieure 20 des bras d'extension 17 et qui est encliqueté dans une gorge extérieure 21 correspondante de la portée cylindrique 9. Du côté du corps 1, ce mandrin 16 comporte une partie tubulaire entourant la paroi 5 de ce corps, une face frontale d'appui tronconique 23 et une collerette périphérique 24 de retenue radiale. Entre ces deux côtés le mandrin 16 comporte une surface de came intérieure tronconique 25 évasée vers les languettes élastiques 6, suivie d'un chambrage 26 tronconique également mais évasé dans la direction opposée, cette came et ce chambrage étant prévus respectivement pour retenir les crans d'arrêt dans la rainure 12 et pour permettre leur dégagement de cette rainure par déplacement relatif axial du manchon 8.
- Une bague de déverrouillage 27, crantée pour faciliter sa saisie, montée coulissante sur le mandrin 16 entre la collerette périphérique 24 de celui-ci et la paroi radiale 10 du manchon 8 sur une course suffisante pour permettre le dégagement des crans d'arrêt 7 dans le chambrage 26 par poussée axiale contre la paroi radiale 10.
- Une partie filetée 28 du corps 1, en arrière de la rainure 4 d'engagement des crans d'arrêt, sur laquelle est engagé un écrou 29 qui se trouve ainsi situé en regard de la face frontale d'appui tronconique 23 du mandrin, et qui présente également une face tronconique correspondante 30 de même conicité ainsi qu'un crantage pour faciliter sa saisie.

Sur la figure 1 montrant ce dispositif de connexion en position de blocage il apparaît clairement, comme déjà décrit dans le paragraphe relatif aux effets de l'invention, que toute traction tendant à séparer ses deux corps ne peut aboutir, que cette traction soit appliquée par exemple sur le corps 2 ou sur la bague de déverrouillage 27.

Appliqué sur le corps 2, l'effort de traction se transmet, par le moyen de la liaison axiale du circlip 19, au mandrin 16 et a sa came tronconique 25, ce qui a pour effet de renforcer la pression des crans d'arrêt 7 dans la rainure 4 du corps 2.

A noter ici, et cela est important au vu des avantages de l'invention, que cet effet de verrouillage de l'engagement des crans d'arrêt 7 dans la rainure 4 se produit également en l'absence de serrage de l'écrou 29 contre la face frontale d'appui du mandrin 16, lorsque l'effort est appliqué seulement au corps 2.

Appliqué sur la bague de déverrouillage 27, l'effort de traction est transmis aux crans d'arrêt 7 par la paroi radiale 10 du manchon 8, ce qui a pour effet de transmettre cet effort à la fois sur la rainure 4 et la came tronconique 25 et de tendre à dégager les crans de cette rainure. Par la retenue de l'écrou 29 serré contre la face frontale 23 du mandrin 16 cette tendance est rendue sans effet, les crans d'arrêt 7 étant bloqués dans la rainure 4 par effet de coin de la came tronconique 25 poussée contre eux par ce serrage.

Après libération de ce blocage par dévissage de l'écrou 29, le déverrouillage peut s'effectuer par simple traction manuelle sur la bague de déverrouillage 27, comme cela est montré par la figure 2.

En un premier temps qui précède celui illustré par cette figure 2, et qui peut se lire sur la figure 1 à la condition d'imaginer l'écrou 29 dévissé, l'effort de traction selon la flèche f₁ appliqué sur la bague de déverrouillage 27 a pour effet, par les composantes de cet effort appliquées par les crans d'arrêt 7 à la fois contre la surface de came tronconique 25 et la rainure 4, d'entraîner un tant soi peu le corps 1 par cette rainure et de permettre ainsi aux crans d'arrêt de remonter sur la paroi tronconique de cette came 25, et enfin de se dégager entièrement dans le chambrage 26 en libérant le corps 1, selon cette figure 2.

Cette figure 2 illustre également la phase d'engagement des deux corps 1 et 2, par poussée directe selon la flèche f₂, du corps 2 dans le corps 1 par exemple, sans nécessiter l'actionnement de la bague de déverrouillage 27. En effet, lors de cet engagement, l'extrémité 14 du corps 1 vient buter contre la face inclinée 13 des crans d'arrêt 7, les soulève en les repoussant dans le chambrage 26 et passe sous eux jusqu'au niveau de la rainure 4 dans laquelle ces crans pénètrent alors par élasticité propre des languettes élastiques 6, en assurant ainsi le verrouillage automatique de l'engagement.

Dans cette forme d'exécution donnée en exemple, le circlip 19 assurant la liaison axiale du mandrin 16 avec le corps 2 présente l'avantage de rendre cette liaison indémontable dans ce sens qu'une fois engagé dans la gorge 21 de ce corps par poussée du mandrin 16 dans la gorge 2 duquel il a été préalablement introduit, il n'est plus possible de l'ouvrir depuis l'extérieur pour l'en déloger. L'ensemble mandrin, languettes élastiques à crans d'arrêt et bague de déverrouillage se trouve ainsi à l'abri de tout risque de désolidarisation d'avec le corps 2.

Mais il est évident que tout autre moyen de liaison peut être appliqué, tel que par exemple par vissage des bras d'extension du mandrin sur une partie filetée du corps 2 et leur blocage contre un épaulement.

Les faces d'appui tronconiques respectives de l'écrou 29 et du mandrin 16 présentent également l'avantage d'affermir naturellement le blocage de l'écrou en évitant l'emploi d'une rondelle frein susceptible d'être perdue à chaque désengagement de la connexion. Mais là aussi cette particularité n'est pas indispensable au vu du but de l'invention.

Enfin il est clair que l'invention est applicable à tous dispositifs de connexion rectilignes ou coudés à 45° ou à 90°, libres ou assujettis par fixation de l'un de leurs deux corps à un tableau.

## Revendications

1. Dispositif de connexion comportant deux corps tubulaires (1, 2) destinés à être raccordés chacun à un conducteur de transmission de signaux et à être engagés l'un dans l'autre temporairement et dégagés l'un de l'autre manuellement, et comprenant des moyens de verrouillage automatique d'engagement et de déverrouillage de dégagement constitués par des languettes élastiques périphériques (6) à crans d'arrêt (7) en saillie associées à l'un (2) des deux corps, une rainure périphérique (4) d'engagement élastique automatique desdits crans d'arrêt (7) située sur une paroi extérieure (5) de l'autre corps (1), et une bague (27) de déverrouillage manuel par déplacement axial pour dégager les crans d'arrêt (7) de la rainure (4), ladite bague (27) étant également associée au corps (2) auquel sont associées les languettes élastiques (6) à crans d'arrêt (7), caractérisé en ce que les languettes élastiques (6) à cran d'arrêt (7) sont portées par un manchon cylindrique (8) coulissant axialement sur une partie limitée du corps (2) auquel sont associées les languettes élastiques (6) et comportant une paroi radiale (10), en ce qu'un mandrin cylindrique (16) est disposé, dans la direction radiale, entre les languettes élastiques (6) et la bague de déverrouillage (27) et comporte d'un côté une extension (17) interpénétrant la paroi radiale (10) du manchon pour passer au-delà de celle-ci et présentant un moyen de liaison axiale (19) au corps (2) portant lesdites languettes, de l'autre côté une face frontale d'appui (23) et une collerette périphérique (24) de retenue axiale, et entre ces deux côtés une surface de came intérieure tronconique (25) de retenue des crans d'arrêt (7) dans la rainure (4) suivie d'un chambrage (26) destiné à permettre leur dégagement de cette rainure par déplacement axial relatif du manchon, en ce que la bague de déverrouillage (27) est montée coulissante axialement sur le mandrin cylindrique (16) entre la collerette périphérique (24) de celui-ci et la paroi radiale (10) du manchon cylindrique (8) sur une course limitée d'un côté par la paroi radiale (10) dudit manchon (8) et suffisante pour permettre le dégagement des crans d'arrêt (7) dans le chambrage (26) du mandrin (16) par poussée axiale contre ladite paroi radiale (10), et en ce que le corps (1) portant la rainure (4) d'engagement des crans d'arrêt (7) présente en arrière de celle-ci une partie filetée (28) sur laquelle est engagé un écrou (29) situé en regard de la face frontale d'appui (23) du mandrin cylindrique (16), la paroi radiale (10) du manchon cylindrique (8) comprenant au moins deux ouvertures (11) diamétralement opposées, et le mandrin cylindrique (16) comprenant deux bras d'extension (17) passant respectivement au travers de ces ouvertures (11).

2. Dispositif selon la revendication 1, caractérisé en ce que le corps (2) portant le manchon (8) à languettes élastiques (6) présente une gorge extérieure (21) dans laquelle est élastiquement engagé un circlip (19) en prise avec jeu radial dans une gorge intérieure (20) des bras d'extension (17).

3. Dispositif selon la revendication 1, caractérisé en ce que le corps portant le manchon (8) à languettes élastiques (6) présente une partie filetée sur laquelle sont vissés les bras d'extension (17).

4. Dispositif selon l'une des revendications 1 à 3, caractérisé en ce que la face frontale d'appui (23) du mandrin cylindrique (16) est tronconique, et en ce que la face de l'écrou (29) située en regard de cette face frontale est aussi tronconique.

## Claims

1. Connecting device comprising two tubular bodies (1, 2) each intended to be coupled to a conductor for the transmission of signals and to be temporarily engaged in one another and released from one another manually, and comprising means for automatic locking for engagement and unlocking for release, consisting of peripheral elastic tongues (6) which have projecting stop catches (7) and are associated with one (2) of the two bodies, a peripheral groove (4) for automatic elastic engagement of said stop catches (7) located on an external wall (5) of the other body (1) and a ring (27) for manual unlocking by axial displacement to release the stop catches (7) from the groove (4), said ring (27) also being associated with the body (2) with which the elastic tongues (6) having stop catches (7) are associated, characterised in that the elastic tongues (6) having stop catches (7) are carried by a cylindrical sleeve (8) sliding axially on a limited portion of the body (2) with which the elastic tongues (6) are associated and comprising a radial wall (10), in that a cylindrical mandrel (16) is arranged, in the radial direction, between the elastic tongues (6) and the unlocking ring (27) and comprises, on one side, an extension (17) inter-penetrating the radial wall (10) of the sleeve so as to pass beyond it and having a means for axial connection (19) to the body (2) carrying said tongues and, on the other side, a supporting front face (23) and a peripheral collar (24) for axial retention and, between these two sides, a truncated internal cam surface (25) for retention of the stop catches (7) in the groove (4) followed by a recess (26) intended to allow their release from this groove by relative axial displacement of the sleeve, in that the unlocking ring (27) is axially slidably mounted on the cylindrical mandrel (16) between the peripheral collar (24) thereof and the radial wall (10) of the cylindrical sleeve (8) over a limited course on one side through the radial wall (10) of said sleeve (8) and adequate to allow the release of the stop catches (7) in the recess (26) of the mandrel (16) by an axial push against said radial wall (10) and in that the body (1) carrying the groove (4) for engagement of the stop catches (7) has, behind the groove, a threaded portion (28) on which there is engaged a nut (29) located opposite the supporting front face (23) of the cylindrical mandrel (16), the radial wall (10) of the cylindrical sleeve (8) comprising at least two diametrally opposed orifices (11) and the cylindrical mandrel (16) comprising two extension arms (17) passing respectively through these orifices (11).

2. Device according to claim 1, characterised in that the body (2) carrying the sleeve (8) with elastic tongues (6) has an external furrow (21) in which there is elastically engaged a circlip (19) meshing with radial clearance in an internal furrow (20) in the extension arms (17).

3. Device according to claim 1, characterised in that the body carrying the sleeve (8) having elastic tongues (6) has a threaded portion on which the extension arms (17) are screwed.

4. Device according to one of claims 1 to 3, characterised in that the supporting front face (23) of the cylindrical mandrel (16) is truncated and in that the face of the nut (29) located opposite this front face is also truncated.

## Patentansprüche

1. Verbindungsvorrichtung mit zwei röhrenförmigen Gehäusen (1,2), welche dazu bestimmt sind, jeweils an einen Signalübertragungs-Leiter angeschlossen zu werden und zeitlich begrenzt miteinander verbunden und manuell voneinander getrennt zu werden, und welche automatische Mittel für die Verriegelung beim Verbinden und die Entriegelung beim Trennen aufweisen, welche Mittel gebildet werden von peripherischen elastischen Zungen (6) mit freiliegenden Rasten (7), welche einem (2) der beiden Gehäuse zugeordnet sind, einer an einer Außenwandung (5) des anderen Gehäuses (1) angeordneten peripherischen Nut (4) für den elastischen, automatischen Eingriff der Rasten (7) und einem Ring (27) zur manuellen Entriegelung durch axiales Verschieben, um die Rasten (7) außer Eingriff mit der Nut (4) zu bringen, wobei der genannte Ring (27) ebenfalls dem Gehäuse (2) zugeordnet ist, dem die elastischen Zungen (6) mit Rasten (7) zugeordnet sind,
**dadurch gekennzeichnet,** daß die elastischen Zungen (6) mit Rasten (7) von einer zylindrischen Hülse (8) getragen sind, welche axial auf einem begrenzten Abschnitt (9) des Gehäuses (2), dem die elastischen Zungen (6) zugeordnet sind, verschiebbar ist und eine radiale Wand (10) aufweist, daß in radialer Richtung zwischen den elastischen Zungen (6) und dem Entriegelungsring (27) eine zylindrische Spannhülse (16) angeordnet ist, welche auf der einen Seite eine Verlängerung (17) aufweist, die die radiale Wand (10) der Hülse durchdringt, um über diese hinauszuragen, und die ein Mittel (19) zur axialen Verbindung mit dem die Zungen tragenden Gehäuse (2) umfaßt und welche Sspannhülse (16) auf der anderen Seite eine vordere Anlagefläche (23) und einen peripherischen, axial wirkenden Rückhaltebund (24) aufweist und zwischen diesen beiden Seiten eine innere, kegelstumpfförmige Steuerfläche (25) für das Halten der Rasten (7) in der Nut (4) und eine sich daran anschließende Kammer (26) aufweist, die das Außer-Eingriff-Bringen der Rasten aus der Nut durch axiales Verschieben der Hülse ermöglicht, daß der Entriegelungsring (27) auf der zylindrischen Spannhülse (16) zwischen deren peripherischem Bund (24) und der radialen Wand (10) der zylindrischen Hülse (8) über eine Strecke axial verschiebbar angeordnet ist, welche auf einer Seite durch die radiale Wand (10) der genannten Hülse (8) begrenzt ist und ausreicht, das Entriegeln der Rasten (7) in die Kammer (26) der Spannhülse (16) hinein durch axialen Druck gegen die radiale Wand (10) zu ermöglichen, und dass das Gehäuse (1), welches zur Aufnahme der Rasten (7) die Eingriffsnut (4) aufweist, hinter dieser einen Gewindeabschnitt (28) aufweist, mit welchem eine Schraubenmutter (29) zusammenwirkt, die gegenüber der vorderen Anlagefläche (23) der zylindrischen Spannhülse (16) angeordnet ist, wobei die radiale Wand (10) der zylindrischen Hülse (8) mindestens zwei einander diametral gegenüberliegende Öffnungen (11) umfasst, und wobei die zylindrische Spannhülse (16) zwei Verlängerungsarme (17) umfasst, welche jeweils durch eine dieser Öffnungen (11) hindurchgreifen.

2. Vorrichtung nach Anspruch 1, dadurch gekennzeichnet, dass das die Hülse (8) mit elastischen Zungen (6) tragende Gehäuse (2) eine äussere Auskehlung (21) aufweist, in welche ein Sicherungsring (19) elastisch eingreift, der sich mit radialem Spiel in Eingriff mit einer inneren Auskehlung (20) der Verlängerungsarme (17) befindet.

3. Vorrichtung nach Anspruch 1, dadurch gekennzeichnet, dass das die Hülse (8) mit elastischen Zungen (6) tragende Gehäuse einen mit einem Gewinde versehenen Abschnitt aufweist, auf den die Verlängerungsarme (17) aufgeschraubt sind.

4. Vorrichtung nach einem der Ansprüche 1 bis 3, dadurch gekennzeichnet, dass die vordere Anlagefläche (23) der zylindrischen Spannhülse (16) kegelstumpfförmig ist und dass die dieser vorderen Fläche gegenüberliegende Fläche der Schraubenmutter (29) ebenfalls kegelstumpfförmig ist.
